# EUROPEAN PATENT SPECIFICATION

(11) **EP 0 594 794 B1**
(45) Date of publication and mention of the grant of the patent: **07.12.1994**
(21) Application number: 92918458.8
(22) Date of filing: 14.07.1992
(51) Int. Cl.: F02M 31/135

(54) **INJECTION COMBUSTION ENGINE WITH FUEL HEATING ELEMENT**
EINSPRITZBRENNKRAFTMASCHINE MIT KRAFTSTOFFHEIZELEMENT
MOTEUR A COMBUSTION INTERNE A INJECTION POSSEDANT UN ELEMENT RECHAUFFEUR DE CARBURANT

(30) Priority: 17.07.1991 NL 9101256
(43) Date of publication of application: 04.05.1994
(73) Proprietor: Texas Instruments Holland B.V., 7600 AA Almelo (NL)
(72) Inventor: BROUWERS, Arnoldus, Maria, NL-7641 DN Wierden (NL); PELGRIM, Robertus, Joseph, NL-7621 EB Borne (NL)
(74) Representative: de Bruijn, Leendert C.
(86) International application number: NL9200130
(87) International publication number: WO9302284

(56) References cited:
- EP-A- 0 404 477
- FR-A- 2 597 694
- US-A- 4 378 001
- PATENT ABSTRACTS OF JAPAN, vol. 9, no. 098 (M-375) 27 April 1985 & JP-A-59 221 452 (YAMAHA HATSUDOKI KK) 13 December 1984

## Description

The invention relates to an injection combustion engine with electrical spark ignition, comprising at least one cylinder with intake duct, at least one inlet valve fitted in the cylinder head, at least one fuel injector, and a heating element provided downstream of said injector.

Such a combustion engine is known from DE-C-3.426.469 and EP-A-0.343.652.

Most of the total exhaust gas emission is formed in the short period during which the engine has not yet reached its operating temperature. Exhaust gas catalytic converters, which in normal circumstances reduce the exhaust gas emission by about 90%, reach this degree of conversion only when the operating temperature of the catalytic converter has been reached. The conversion starts at a temperature of around 300°C, so that after a cold start the exhaust gas emission of the engine undergoes little or no reduction in a catalytic converter. Since the temperature level during a cold start is not high enough to vaporise the fuel (petrol or alcohol) sufficiently, an additional quantity of fuel must be added when the engine is cold, in order to obtain a combustible mixture. This leads to a high exhaust gas emission. At low engine temperature both fuel consumption and exhaust gas emission are therefore relatively high. Heating the fuel/air mixture in this phase therefore makes a considerable contribution to improvement of the environment, and also achieves a considerable fuel saving, beause little or no additional fuel need be injected. The fuel in the combustion engine mentioned in the preamble is sprayed onto the heating element brought to the desired temperature in a short time, and is thereby brought to the desired temperature. This will make the fuel vaporise better, and a better mixing with the combustion air is also achieved. The heating element is switched off when the engine is warm enough to take over vaporisation of the fuel.

In the case of the engine known from DE-A-3.426.469 the heating element is made in the form of a pipe projecting into the intake duct of the cylinder and surrounded by an insulating tube. The pipe and the tube are provided with an edge flange which lies in a recess of the cylinder head and is fixed by the air inlet duct. A disadvantage of this design is that it is a time-consuming job to fit and replace the heating element. The same problem applies to the engine according to EP-A-0.343.652, in which the heating element is integrated in a plate wedged between the intake duct and the cylinder head.

The object of the invention is to eliminate this disadvantage and to provide an engine of the type described in the preamble, in which the heating element, on the one hand, is of an extremely simple and cheap design and, on the other, is easy to fit and replace. The efficiency and speed of heating is also improved, due to the fact that there is less mass between heated element and heat-absorbing mixture than is usual.

According to the invention, the injection combustion engine mentioned in the preamble to this end is characterised in that the heating element is in the form of an enamelled metal plate, on which plate a current-conducting material with a current supply and a current discharge connection is printed.

In order to improve the transfer of heat from the heating element to the fuel-air mixture, the heating element can be fixed inside the intake duct at a distance from its inner surface, and the plate can be bent into a channel shape.

There are three possibilities for automatic switching off of the electric current when the engine is warm. A thermostat can be provided in the current supply to or discharge from the printed current-conducting material. As an alternative, a PTC element can be fixed on the plate in the current path in such a way that with increasing temperature the current through the printed electrically conducting material decreases. The preferred alternative is, however, for the current conducting printed circuit itself to have PTC properties.

The invention also relates to a heating element.

The invention will now be explained in greater detail with reference to the figures.

Figure 1 shows a cross-section of a part of a combustion engine according to the invention.

Figure 2 shows a perspective view of the heating element to be used in the engine according to figure 1.

Figure 3 shows a top view of the heating element according to figure 2.

Figure 4 shows a top view of an alternative embodiment of the heating element.

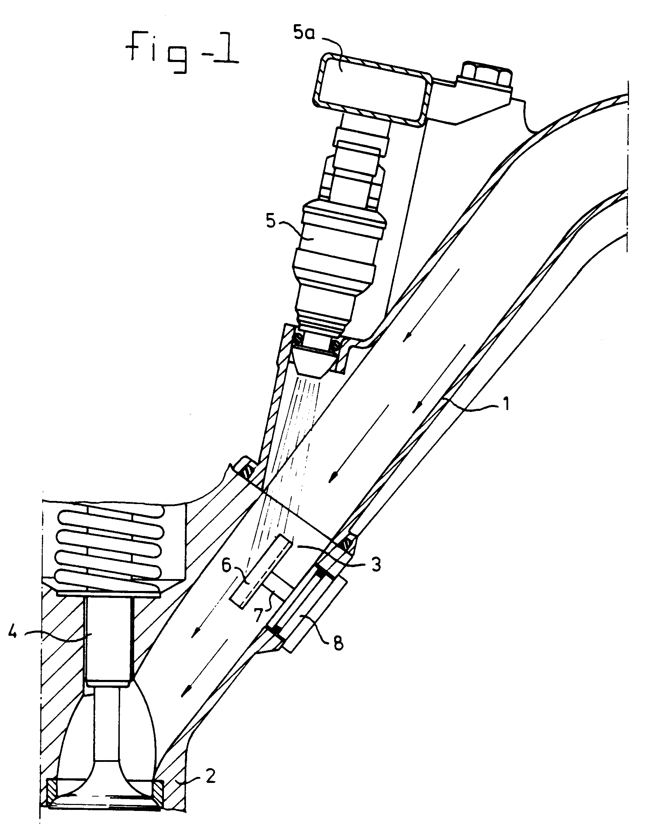

The part of an injection engine shown in figure 1 comprises an air inlet duct 1, which is fixed on a cylinder head 2 in such a way that its connects to a duct 3 for supplying a fuel-air mixture to the cylinder by means of one or two inlet valves 4. The ducts 1 and 3 form the so-called intake duct.

An injector 5 for injecting fuel, connected to a fuel supply duct 5a, is fixed on the air inlet duct 1.

In order to bring injected fuel to the desired temperature when the engine is cold, the fuel is sprayed onto a heating element 6 during injection. This heating element is connected by means of a rod 7 or the like to a cover 8 fitted so that it is sealed in an aperture of the duct 2. As can be seen from the drawing, the heating element 6 is situated at a place where the injected fuel comes into contact with the element 6.

In the case of a cylinder with two inlet valves a partition which is known per se can be provided between the end of the duct 2 facing the valves and the heating element 6.

The heating element 6 comprises an enamelled metal plate bent into a channel shape and having a resistor printed circuit 9 of an electrically conducting ink or paste, and a current supply 10 and a current discharge 11.

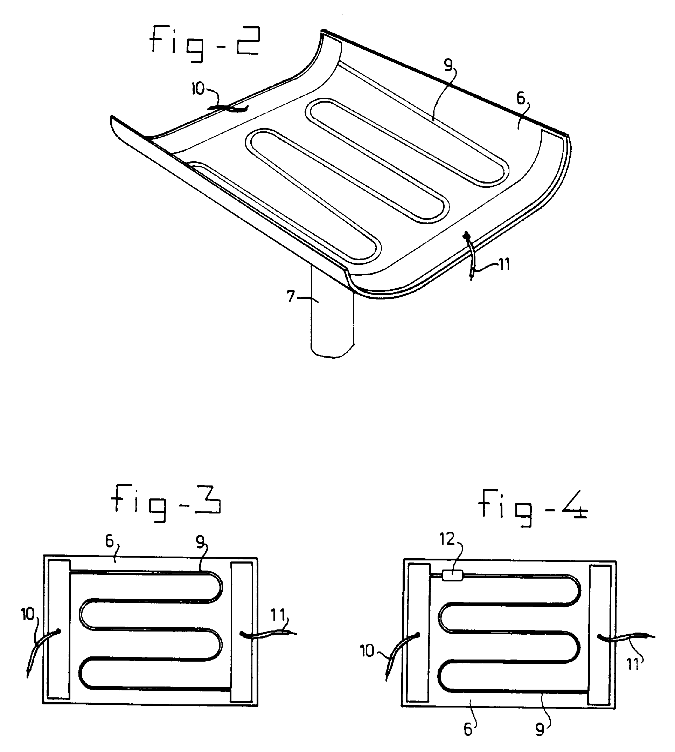

A provision will be necessary in order to interrupt the current when the engine is warm enough. It can be a thermostat fitted in the current supply to discharge. However, in the embodiment shown in figure 4 of PTC element 12 has been selected, said element being glued on the enamelled printed circuit and greatly restricting the passage of current at a certain temperature.

The simplest and most reliable embodiment is that in which the printed circuit 9 itself - at least a part of it - is made of an ink or paste with PTC (positive temperature coefficient) properties.

It is not necessary for the plate 6 to be bent into a channel shape. It can also be flat. The zigzag shape of printed circuit 9 shown can also be replaced by a printed circuit covering the entire surface of the plate. The heating element can also be fitted in the air inlet duct 1, of course at a plate where the injected fuel comes into contact with it.

## Claims

1. Injection combustion engine with electrical spark ignition, comprising at least one cylinder with intake duct (1), at least one inlet valve (4) fitted in the cylinder head (2), at least one fuel injector (5) and a heating element (6) provided downstream of said injector, characterized in that the heating element is in the form of an enamelled metal plate (6), on which plate a current-conducting material (9) with a current supply and a current discharge connection is printed.

2. Heating element for an engine according to claim 1, characterized in that the heating element is in the form of an enamelled metal plate, on which plate a current-conducting material with a current supply and a current discharge connection is printed.

## Patentansprüche

1. Einspritz-Verbrennungskraftmaschine mit elektrischer Funkenzündung, mit wenigstens einem Zylinder mit einem Ansaugrohr (1), wenigstens einem in dem Zylinderkopf (2) befestigten Einlaßventil (4), wenigstens einer Kraftstoffeinspritzdüse (5) sowie einem stromabwärts von der Einspritzdüse vorgesehenen Heizelement (6), dadurch gekennzeichnet, daß das Heizelement die Form einer emaillierten Metallplatte (6) besitzt, auf die ein stromleitendes Material (9) mit einem Stromzufuhranschluß und einem Stromabfuhranschluß aufgedruckt ist.

2. Heizelement für eine Maschine nach Anspruch 1, dadurch gekennzeichnet, daß das Heizelement die Form einer emaillierten Metallplatte besitzt, auf die ein stromleitendes Material mit einem Stromzufuhranschluß und einem Stromabfuhranschluß aufgedruckt ist.

## Revendications

1. Moteur à combustion interne à injection à allumage par étincelle électrique, comprenant au moins un cylindre ayant un canal (1) d'admission, au moins une soupape d'admission (4) montée dans la culasse (2), au moins un injecteur (5) de carburant et un élément chauffant (6) disposé en aval du dit injecteur,
caractérisé en ce que l'élément chauffant se présente sous forme d'une plaquette métallique émaillée (6), sur laquelle est imprimée une matière (9) conductrice de courant comportant un connecteur d'alimentation en courant et un connecteur de retour de courant.

2. Elément chauffant pour un moteur selon la revendication 1, caractérisé en ce que l'élément chauffant (6) se présent sous forme d'une plaquette métallique émaillée, sur laquelle est imprimée une matière conductrice de courant comportant un connecteur d'alimentation en courant et un connecteur de retour de courant.
